# EUROPÄISCHE PATENTSCHRIFT

(11) **EP 1 649 659 B1**
(45) Veröffentlichungstag und Bekanntmachung des Hinweises auf die Patenterteilung: **30.04.2008**
(21) Anmeldenummer: 04731013.1
(22) Anmeldetag: 04.05.2004
(51) Int. Cl.: H04L 29/06

(54) **VERBINDUNG VON TEILNEHMERN IN HYBRIDEN KOMMUNIKATIONSNETZEN**
CONNECTION OF USERS IN HYBRID COMMUNICATION NETWORKS
LIAISON ENTRE ABONNES DANS DES RESEAUX DE COMMUNICATION HYBRIDES

(30) Priorität: 01.08.2003 EP 03017482
(43) Veröffentlichungstag der Anmeldung: 26.04.2006
(73) Patentinhaber: Nokia Siemens Networks GmbH & Co. KG, 81541 München (DE)
(72) Erfinder: HUFFSCHMID, Norbert, 82110 Germering (DE)
(86) Internationale Anmeldenummer: PCT/EP2004/050688
(87) Internationale Veröffentlichungsnummer: WO 2005/013577

(56) Entgegenhaltungen:
- WO-A-03/054717
- WO-A-03/061242
- US-A1- 2003 007 460
- ROSENBERG; PETERSON; SCHULTZRINNE; CAMARILLO: "Best Current Practices for Third Party Call Control in the Session Initiation Protocol (draft-ietf-sipping-3pcc-04)" IETF INTERNET DRAFT, [Online] 30. Juni 2003 (2003-06-30), Seiten 1-34, XP002264759 Gefunden im Internet: URL:http://www.ietf.org/proceedings/03jul/ I-D/draft-ietf-sipping-3pcc-04.txt> [gefunden am 2003-12-11]
- ROSENBERG ET AL: "Third party call control in SIP" IETF INTERNET DRAFT, 21. November 2001 (2001-11-21), Seiten 1-20, XP002216048 Gefunden im Internet: URL:http://standards.ericsson.net/g...draf t-rosenberg-sip-3pcc-03.txt> [gefunden am 2002-10-09]
- CHIANG T-C ET AL: "THE NEED FOR THIRD-PARTY CALL CONTROL" BELL LABS TECHNOLOGY, BELL LABORATORIES, MURREY HILL, NJ, US, Bd. 7, Nr. 1, 2002, Seiten 41-46, XP001125123 ISSN: 1089-7089
- DAVID SCHWARTZ: "RE: [Sipping] Re: Update to 3pcc - corrected" IETF MAIL ARCHIVE WORKING GROUPS, [Online] 30. Juli 2003 (2003-07-30), Seiten 1-4, XP002264760 Gefunden im Internet: URL:http://www1.ietf.org/mail-archive/work ing-groups/sipping/current/msg05032.html> [gefunden am 2003-12-11]
- BERT CULPEPPER: "[Sip-implementors] [Sip] certain questions on third party call control ... [2]" SIP IMPLEMENTORS LIST, [Online] 25. September 2002 (2002-09-25), Seiten 1-4, XP002264761 Gefunden im Internet: URL:http://lists.cs.columbia.edu/pipermail /sip-implementors/2002-September/003891.ht ml> [gefunden am 2003-12-11]

## Beschreibung

In der Vergangenheit haben sich zwei wesentliche Typen von Kommunikationsnetzen zur Übermittlung von Informationen herausgebildet: Paketorientierte (Daten-) Netze und leitungsorientierte (Sprach-) Netze. Im Zuge der Konvergenz dieser beiden Netztypen haben sich konvergente (Sprach-Daten-) Netze herausgebildet. Durch Zusammenschluss dieser unterschiedlichen Netztypen entstehen hybride Netze, in denen der Gegenstand der vorliegenden Erfindung mit besonders schönen Vorteilen zum Einsatz kommt.

[ROSENBERG et al., "Best Current Practices for Third Party Call Control in the Session Initiation Protocol (draft-ietf-sipping-3pcc-04)"] betrifft ein Verfahren zur Verbindungssteuerung unter Anwendung von SIP (Session Initiation Protocol).

[ROSENBERG et al., "Third party call control in SIP"] betrifft eine von einer Kontrolleinheit initiierte Verbindungssteuerung unter Benutzung des SIP.

Leitungsorientierte Netze - auch Sprachnetze oder Telephonnetze genannt - sind auf die Übermittlung von in der Fachwelt auch als Gespräch, Call oder Session bezeichneten kontinuierlich strömenden (Sprach-) Informationen ausgelegt. Die Übermittlung der Informationen erfolgt hierbei üblicherweise mit hoher Dienstgüte und Sicherheit. Beispielsweise ist für Sprache eine minimale - z.B. < 200 ms - Verzögerung (Delay) ohne Schwankungen der Verzögerungszeit (Delay-Jitter) wichtig, da Sprache bei Wiedergabe im Empfangsgerät einen kontinuierlichen Informationsfluss erfordert. Ein Informationsverlust kann deshalb nicht durch ein nochmaliges Übermitteln der nicht übermittelten Information ausgeglichen werden und führt im Empfangsgerät üblicherweise zu einem akustisch wahrnehmbaren Knacksen. In der Fachwelt wird die Übermittlung von Sprache verallgemeinert auch als Echtzeit-(Übermittlungs-)Dienst bzw. als 'Realtime-Service' bezeichnet.

Paketorientierte Netze - auch Datennetze genannt - sind auf die Übermittlung von in der Fachwelt auch als 'Datenpaketströme' oder 'Flow' bezeichneten Paketströmen ausgelegt. Hierbei muss üblicherweise keine hohe Dienstgüte garantiert werden. Ohne garantierte Dienstgüte erfolgt die Übermittlung der Datenpaketströme z.B. mit zeitlich schwankenden Verzögerungen, da die einzelnen Datenpakete der Datenpaketströme üblicherweise in der Reihenfolge ihres Netzzugangs übermittelt werden, d.h. die zeitlichen Verzögerungen werden umso größer, je mehr Pakete von einem Datennetz zu übermitteln sind. In der Fachwelt wird die Übermittlung von Daten deshalb auch als Übermittlungsdienst ohne Echtzeitbedingungen bzw. als 'Non-Realtime-Service' bezeichnet.

Die Pakete können beispielsweise je nach Art des paketorientierten Netzes als Internet-, X.25- oder Frame-Relay-Pakete, aber auch als ATM-Zellen ausgebildet sein. Sie werden zuweilen auch als Nachrichten bezeichnet, v.a. dann, wenn eine Nachricht in einem Paket übermittelt wird.

Ein bekanntes Datennetz ist das Internet. Dieses wird wegen des dort zum Einsatz kommenden Internet Protokolls IP zuweilen auch IP-Netz genannt, wobei dieser Begriff grundsätzlich weit zu verstehen ist und alle Netze umfasst, in denen das IP Protokoll eingesetzt wird. Das Internet ist als offenes (Weitverkehrs-) Datennetz mit offenen Schnittstellen zur Verbindung von (zumeist lokalen und regionalen) Datennetzen unterschiedlicher Hersteller konzipiert. Es stellt eine herstellerunabhängige Transportplattform zur Verfügung.

Verbindungen sind Kommunikationsbeziehungen zwischen zumindest zwei Teilnehmern zum Zweck einer - zumeist gegenseitigen, d.h. bi-direktionalen - Informationsübermittlung. Der die Verbindung initiierende Teilnehmer wird üblicherweise als 'A-Teilnehmer' bezeichnet. Ein durch eine Verbindung mit einem A-Teilnehmer in Verbindung gesetzter Teilnehmer heißt 'B-Teilnehmer'. In einem verbindungslosen Netz repräsentieren Verbindungen zumindest die auf logisch abstrakter Ebene eindeutige Beziehung zwischen A- und B-Teilnehmer, d.h. entsprechend dieser Sichtweise stellen z.B. die verbindungslosen Flows im Internet logisch abstrahierte Verbindungen dar (z.B. A-Teilnehmer = Browser und B-Teilnehmer = Web Server). In einem verbindungsorientierten Netz repräsentieren Verbindungen zudem auf physikalischer Ebene eindeutige Wege durch das Netz, entlang denen die Informationen übermittelt werden.

Im Zuge der Konvergenz von Sprach- und Datennetzen werden Sprachübermittlungsdienste und zunehmend auch breitbandigere Dienste wie z.B. Übermittlung von Bewegtbildinformationen ebenfalls in paketorientierten Netzen realisiert, d.h. die Übermittlung der bisher üblicherweise leitungsorientiert übermittelten Echtzeitdienste erfolgt in einem konvergenten Netz - auch Sprach-Daten-Netz genannt - paketorientiert, d.h. in Paketströmen. Diese werden auch Echtzeitpaketströme genannt. Die Übermittlung von Sprachinformationen über ein paketorientiertes IP Netz wird dabei auch mit 'VoIP' (Voice over IP) gekennzeichnet.

In den internationalen Standardisierungsgremien IETF (Internet Engineering Task Force) und ITU (International Telecommunications Union) mehrere Architekturen für Sprach-Daten-Netze beschrieben. Allen ist gemeinsam, dass die Call Control Ebene und die Resource Control Ebene funktional deutlich voneinander getrennt sind.

Die Call Control Ebene umfasst dabei zumindest einen (optionalen) Call Controller, dem u.a. folgende Funktionen zugeordnet sind:
- Address Translation: Umsetzung von E.164 Telephonnummern und anderen Alias Adressen (z.B. Rechnernamen) auf Transportadressen (z.B. Internetadressen).
- Admission Control (optional): Grundsätzliche Zulässigkeitsprüfung, ob und in welchem Umfang (z.B. VoIP fähige) Einrichtungen das Kommunikationsnetz nutzen dürfen.
- Bandwidth Control (optional): Verwaltung von Übermittlungskapazitäten.
- Zone Management: Registrierung von (z.B. VoIP fähigen) Einrichtungen und Bereitstellung obiger Funktionen für alle beim Call Controller registrierten Einrichtungen.

Optional können einem Call Controller zudem folgende Funktionen fallweise zugeordnet werden:
- Call Control Signalling: Alle Signalisierungsnachrichten werden von zumindest einem Call Controller vermittelt, d.h. alle Einrichtungen schicken und erhalten Signalisierungsnachrichten nur über den Call Controller. Ein direkter Austausch von Signalisierungsnachrichten zwischen den Einrichtungen ist untersagt.
- Call Authorization: Zulässigkeitsprüfung für eingehende und ausgehende Calls.
- Bandwidth Management: Steuerung der zulässigen Anzahl von Einrichtungen, die gleichzeitig das Kommunikationsnetz nutzen dürfen.
- Call Management: Verwaltung einer Liste bestehender Gespräche, um z.B. ein Besetzzeichen erzeugen zu können, falls dies von der Einrichtung selbst nicht erzeugt werden kann.
- Alias Address Modification: Rückgabe einer modifizierten Alias Adresse, bspw. mit einer H.225.0 Nachricht ACF (Admission Confirmation). Diese Adresse muss der Endpunkt bei Verbindungsaufbau verwenden.
- Dialed Digit Translation: Übersetzung der gewählten Ziffern in eine E.164 Telephonnummer oder eine Nummer aus einem privaten Nummerierungsschema.

Beispiele für Call Controller stellen der von der ITU in der H.323 Standard Familie vorgeschlagene 'Gatekeeper' oder der von der IETF vorgeschlagene 'SIP Proxy' dar. Wird ein größeres Kommunikationsnetz in mehrere Domänen - auch 'Zonen' genannt - gegliedert, kann in jeder Domäne ein separater Call Controller vorgesehen werden. Eine Domäne kann auch ohne einen Call Controller betrieben werden. Sind mehrere Call Controller in einer Domäne vorgesehen, soll nur ein einziger von diesen aktiviert sein. Ein Call Controller ist aus logischer Sicht getrennt von den Einrichtungen zu sehen. Physikalisch muss er jedoch nicht in einer separaten Call Controller Einrichtung realisiert sein, sondern kann auch in jedem Endpunkt einer Verbindung (beispielsweise ausgebildet als H.323 oder SIP Endpunkt, Endgerät, Media Gateway, Multipoint Control Unit) oder auch einer primär zur programmgesteuerten Datenverarbeitung ausgebildeten Einrichtung (beispielsweise: Rechner, PC, Server) vorgesehen werden. Auch eine physikalisch verteilte Realisierung ist möglich.

Die Resource-Control-Ebene umfasst zumindest einen Resource-Controller, dem u.a. folgende Funktionen zugeordnet sind:
- Capacity Control: Steuerung des dem Kommunikationsnetz durch Paketströme zugeführten Verkehrsvolumens, z.B. durch Kontrolle der Übermittlungskapazität einzelner Paketströme.
- Policy Activation (optional): ggf. für einen priorisierten Paketstrom Resourcen im Kommunikationsnetz für dessen Übermittlung reservieren.
- Priority Management (optional): Prioritätskennzeichen in den Paketen entsprechend der Priorität ihrer Paketströme setzen, kontrollieren und gegebenenfalls korrigieren, falls die Pakete bereits mit Prioritäten gekennzeichnet sind.

Der Resource Controller wird auch als 'Policy Decision Point (PDP)' bezeichnet. Er ist beispielsweise innerhalb von sog. Edge Routern - auch Edge Device, Zugangsknoten oder bei Zuordnung zu einem Internet Service Provider (ISP) auch Provider Edge Router (PER) genannt - realisiert. Diese Edge Router können auch als Media Gateway zu anderen Netzen ausgebildet sein, mit denen die Sprach-Daten-Netze verbunden werden. Diese Media Gateway sind dann sowohl mit einem Sprach-Daten-Netz als mit den anderen Netzen verbunden und dienen intern der Umsetzung zwischen den unterschiedlichen Protokollen der verschiedenen Netze. Der Resource Controller kann auch nur als Proxy ausgebildet sein und Resource Controller relevante Informationen an eine separate Einrichtung weiterleiten, auf dem der Resource Controller realisiert ist.

Das prinzipielle Zusammenwirken von Call Controller und Resource Controller gemäß dem Session Initiation Protokoll (SIP) der IETF bzw. der H.323 Protokollfamilie der ITU sei am Beispiel eines Call Setup zwischen zwei als Teilnehmerendgeräte ausgebildeten VoIP Einrichtungen erläutert. Dabei wird zunächst von einem homogenen Sprach-Daten-Netz ausgegangen.

Innerhalb oder teilweise auch zeitlich vor dem eigentlichen Call Setup laufen bei Einwahl eines Endgeräts in das IP-Netz (z.B. über einen Internet Service Provider) die Schritte Authentisierung, Autorisierung und (Start des) Accounting ab. Diese sogenannte 'AAA' Funktionalität wird üblicherweise durch den Zugriff auf eine Subscriber-Datenbank, in der alle Nutzer mit ihren Kennungen, Passwörtern, Rechten, etc. gespeichert sind, realisiert. Dieser Zugriff ist langsam und vergleichsweise komplex. In den heutigen "Best Effort" IP Netzen findet dieser AAA Vorgang normalerweise einmal während des Einwählens des Nutzers statt. Eine weitere Authentisierung erfolgt bei Einsatz eines Call Controllers, wenn sich das Endgerät beim Call Controller des Internet Service Providers registriert. Nach dem ITU-Standard H.323 wird diese Authentisierung bzw. Registrierung eines Endgeräts beim zugeordneten Gatekeeper gemäß dem RAS (Registration, Admission, Status) Protokoll durchgeführt, das im ITU-Standard H.225.0 beschrieben ist.

Der eigentliche Call Setup beginnt üblicherweise damit, dass in einem ersten Schritt die Endgeräte der Teilnehmer ihre Fähigkeiten (z.B. Liste der unterstützten CODEC) austauschen, um die benötigten Ressourcen (z.B. Bandbreite) und die geforderte QoS (z.B. Delay, Jitter) zu bestimmen. Die Endgeräte sind bei Sprachtelephonie z.B. als IP-Telephone ausgebildet, bei Online-Video wäre eines der Endgeräte ein Content- bzw. Application-Server, z.B. im Netz des ISP.

Der Austausch der Signalisierungsnachrichten erfolgt entweder direkt zwischen den Endgeräten oder unter Vermittlung eines Call Controllers. Hierbei ist bei jedem Call für jedes Endgerät und für jede Übertragungsrichtung individuell festgelegt, welche Variante zum Einsatz kommt. Die erste Variante wird in der H.323 Terminologie auch als 'Direkt Endpoint Call Signalling' und die zweite als 'Gatekeeper Routed Call Signalling' bezeichnet. Bei Direct Endpoint Call Signalling können an einen Call Controller ggf. Kopien ausgewählter Signalisierungsnachrichten übermittelt werden, so dass ein Call-Controller auch bei dieser Variante häufig Kenntnis von den zwischen den Endgeräten abgestimmten Ressourcen- und QoS-Anforderungen hat. Diese Anforderungen werden jedoch von ihm selbst nicht aktiv beeinflusst oder verifiziert.

In einem zweiten, optionalen Schritt kann die derart abgestimmte Ressourcen- und QoS-Anforderung direkt von den Endgeräten der Teilnehmer an ihren zugeordneten Resource Controller übermittelt werden. Nach Prüfung der Ressourcen- und QoS-Anforderung wird von dem Resource Controller eine Bestätigung (oder Ablehnung) an das Endgerät zurückgeschickt.

In einem dritten, ebenfalls optionalen Schritt wird im Edge Router und gegebenenfalls weiteren Routern im Netz eine Policy aktiviert, mit der diese Router prüfen und gewährleisten, dass der vom Endgerät verursachte Verkehr innerhalb der Grenzen liegt, die in der Anforderung spezifiziert wurden. Ein Beispiel für einen derartigen Reservierungsmechanismus ist RSVP (resource ReSerVation Protocol).

Zur Durchführung der drei Schritte wird eine Mehrzahl von Nachrichten versendet, die lediglich zur Abstimmung der beteiligten Komponenten untereinander, jedoch nicht zur Übermittlung der "eigentlichen Informationen" zwischen den Endgeräten dienen. Diese mit den Nachrichten übermittelten Informationen werden üblicherweise als Signalisierungsinformationen, Signalisierungsdaten bzw. schlicht als Signalisierung bezeichnet. Der Begriff ist dabei weit zu verstehen. So sind z.B. neben den Signalisierungsnachrichten auch die Nachrichten gemäß dem RAS Protokoll, die Nachrichten gemäß dem ITU-Standard H.245 zur Steuerung von Nutzkanälen bestehender Gespräche sowie alle weiteren ähnlich ausgebildeten Nachrichten umfasst. Das Signalisierungsprotokoll für den Verbindungsaufbau (Call Setup) und -abbau (Call Release) nach der ITU ist z.B. im Standard H.225.0 beschrieben, das nach der IETF im RFC 2453bis ("SIP: Session Initiation Protocol"). Die "eigentlichen Informationen" werden zur Unterscheidung von der Signalisierung auch Nutzinformationen, Payload, Medieninformationen, Mediendaten oder schlicht Medien genannt.

Kommunikationsbeziehungen, die zur Übermittlung der Signalisierung dienen, werden im weiteren auch als Signalisierungsverbindungen bezeichnet. Die zur Übermittlung der Nutzinformationen eingesetzten Kommunikationsbeziehungen werden z.B. Sprechverbindung, Nutzkanalverbindung oder - vereinfacht - Nutzkanal, Bearerchannel oder schlicht Bearer genannt.

Bei Zusammenschluss eines derartigen konvergenten Sprach-Daten-Netzes mit einem konventionellen leitungsorientierten Sprachnetz entstehend bei Übermittlung von Informationen über die Grenzen der jeweiligen Netze hinweg neue technische Problemstellungen aufgrund der unterschiedlichen Technologien, die in den jeweiligen Netztypen zum Einsatz kommen.

Es ist Aufgabe der Erfindung, zumindest eines dieser Probleme zu erkennen und durch Angabe von zumindest einer Lösung den Stand der Technik zu bereichern.

Die Erfindung stellt sich die Frage, warum es die VoIP Technologie es bis heute nicht geschafft hat, sich flächendeckend als Alternative zur konventionellen, leitungsorientierten Telephonnetzen durchzusetzen. Während sich VoIP innerhalb von privaten (Unternehmens-) Netzen schon etablieren konnte, ist dies in öffentlichen Netzen - auch Public Switched Telephone Network (PSTN) genannt - noch nicht erfolgt. Die fortschreitende Verbreitung von sogenannten Messenger Applikationen auf privat benutzten Rechnern - auch Personal Computer (PC) genannt - erlaubt zwar mittlerweile auch den Aufbau von Sprechverbindungen von PC zu PC. Telephonate vom PC aus in das öffentliche Telefonnetz sind aber immer noch nicht weit verbreitet.

Ein Grund für diese langsame Verbreitung von VoIP in hybriden Netzen, die auch ein öffentliches Telephonnetz umfassen, liegt aus Sicht der Erfindung in der Vergebührung. Bei der Überleitung der Verbindung in das PSTN entstehen für den Betreiber des PSTN Kosten, die letztendlich der anrufende Teilnehmer tragen muss. Diesen Teilnehmer eindeutig zu identifizieren und ihm nachträglich die Kosten für sein Gespräch in Rechnung zu stellen ist jedoch schwierig und wurde bisher noch nicht zufriedenstellend gelöst.

Es ist bekannt, dass sich VoIP Teilnehmer eine Client Software auf ihrem PC installieren und sich mit Hilfe dieser Software im folgenden auf dem zentralen Kommunikationsserver ihres VoIP Providers (z.B. MSN, Yahoo) registrieren. Da sich alle Nutzer einer bestimmten Client Software üblicherweise bei dem gleichen zentralen Server registrieren, ist es technisch vergleichsweise einfach, Kommunikationsbeziehungen zwischen allen registrierten Teilnehmern herzustellen. Da diese Verbindungen innerhalb des IP Netzes bleiben, fallen auch keine Gesprächsgebühren an, die man den Teilnehmern in Rechnung stellen müsste.

Anders verhält es sich, wenn man mit solch einer Client Software ein Gespräch in das PSTN aufbauen will. Der VoIP Provider muss in diesem Fall die Verbindung über einen Media Gateway zu einem bestimmten PSTN führen (routen). Der Betreiber des PSTN (PSTN Betreiber) hat dann üblicherweise ein Abrechnungsabkommen mit dem VoIP Provider, um ihm die anfallenden Verbindungskosten in Rechnung zu stellen. Der VoIP Provider wird seinerseits das Geld vom Nutzer der Clientsoftware einfordern.

Dieses Verfahren ist zumindest für zwei der beteiligten Parteien mit Nachteilen behaftet:
- Der PSTN Betreiber muss sein Netz mit einer Vielzahl verschiedener VoIP Providern zusammenschließen. Weiterhin muss er für jeden dieser VoIP Betreiber ein individuelles Abrechnungsverfahren etablieren. Er kann aber trotzdem die VoIP Teilnehmer nicht direkt adressieren, um z.B. seinen Dienst zu bewerben oder direkte Rechnungen zu stellen, da er keine verlässliche Möglichkeit der Teilnehmeridentifizierung hat.
- Der VoIP Teilnehmer ist bei den PSTN Verbindungen von den Konditionen abhängig, die ihm sein VoIP Provider anbietet. Dies begrenzt die Flexibilität der VoIP Teilnehmer, wenn der Netzübergang per Media Gateway nur zum PSTN eines oder weniger PSTN Betreiber realisiert wird. Diese Begrenzung wird verstärkt, wenn bei einem weltweit agierenden VoIP Provider diese reduzierte Auswahl von PSTN Betreiber in vielen Länder besteht.

Eine Lösung für diese der Erfindung zugrunde liegende Problemsituation ist in den Patentansprüchen angegeben.

Mit dieser Lösung sind eine Vielzahl von Vorteilen verbunden:
- Durch die Zuweisung der Teilnehmeridentifikation zu einem Server wird die bisherige starre Konfiguration aufgelöst, bei der die Identität eines VoIP Teilnehmers nur seinem zugeordneten VoIP Provider bekannt ist. Diese Flexibilisierung ermöglicht andere Konfigurationen, bei denen je nach deren Ausbildung auch anderen als dem VoIP Provider die Identität des A-Teilnehmers bekannt sein kann. Insbe sondere kann dieser Andere auch ein PSTN Betreiber sein.
- Durch die Verschiebung des Aufbaus der Signalisierungsverbindung in das PSTN, die bislang im Anschluss an den Verbindungswunsch des A-Teilnehmers vom VoIP Betreiber ausging, hin zu dem Server wird die Vergebührung vom VoIP Provider entkoppelt, weil die Vergebührung üblicherweise demjenigen zugeschrieben wird, der den Aufbau einer Verbindung initiiert, d.h. vorliegend dem Betreiber des Server und nicht mehr dem VoIP Betreiber.
- Ein PSTN Betreiber kann bei Entkopplung von Server und VoIP Betreiber direkt Endkunden für seinen Dienst gewinnen, ohne auf die Zusammenarbeit mit einem VoIP Provider angewiesen zu sein.
- Diese Entkoppelung ermöglicht eine Zentralisierung, bei der weniger Server als VoIP Provider vorgesehen sind. In diesem Fall reduziert sich die Anzahl der Server, für die von den PSTN Betreibern ein individuelles Abrechnungsverfahren etablieren muss, wodurch vorteilhaft eines der von der Erfindung erkannten Probleme gelöst wird.
- Im Falle der durch die Erfindung ermöglichten Option einer Zentralisierung des Servers ist wegen der dann geringeren Anzahl von Servern, die ggf. zudem im Wettbewerb zueinander stehen, eine Anbindung an mehrere PSTN Betreiber zu erwarten, weil die Anzahl der Anbindungen sinkt und somit leichter handhabbar wird und der Wettbewerb infolge der dort gebotenen Differenzierung der unterschiedlichen Server die Ausbildung eines breiten Angebots an PSTN Betreibern fördert. Dies verringert das Problem der VoIP Teilnehmer, in ihrer Auswahl von PSTN Betreibern beschränkt zu sein.

Weitere vorteilhafte Ausgestaltungen der Erfindung ergeben sich aus den unter- oder nebengeordneten Ansprüchen.

Bei Ausbildung des Servers als WEB Applikation, d.h. als Computerprogramm, auf das mit einem beliebigen, zeitgemäßen Browser (z.B. Microsoft Interner Explorer, Netscape Communicator) durch Angabe einer weltweit eindeutigen URL wahlfrei zugegriffen werden kann, wird eine vollständige Entkopplung zwischen dem physikalischen Netzzugang von Teilnehmern und der Anordnung des Server bewirkt. Dies bedeutet, dass der Server prinzipiell an einem beliebigen Ort weltweit positioniert werden kann.

Bei Erfassung der IP Adresse eines auf die WEB Applikation zugreifenden Teilnehmers kann diese automatisch den ankommenden IP Paketen entnommen werden, so dass vorteilhaft keine manuelle Eingabe der IP Adresse erforderlich ist. In diesem Fall ist nur die manuelle Erfassung derjenigen Daten erforderlich, durch die der gerufene Teilnehmer gekennzeichnet wird.

Durch eine Anfrage bei dem Teilnehmer, dessen IP Adresse bekannt ist, kann ermittelt werden, welche Client Software bei diesem Teilnehmer zur Nutzung von VoIP zum Einsatz kommt. Dies führt zu dem Vorteil, dass der VoIP Teilnehmer nicht mehr, wie heute noch üblich, eine spezielle Client Software installieren muss. Der VoIP Teilnehmer muss sich nicht mehr auf einen bestimmen VoIP Provider festlegen und dessen Client auf seinem PC installieren, wodurch er auf die PSTN Betreiber festgelegt wird, die mit dem VoIP Provider ein Abrechnungsverfahren etabliert haben. Er kann stattdessen aus einer Vielzahl von PSTN Betreibern den für seine Bedürfnisse geeignetsten heraussuchen und direkt von diesem abgerechnet werden.

Durch Bestimmung der Identität eines Teilnehmers - bspw. durch Relationen seiner kennzeichnenden Daten mit einer be stehenden Registrierungsdatenbank, kann eine unmittelbare Vergebührung an diesen Teilnehmer mithilfe der in der Registrierungsdatenbank hinterlegten Daten erfolgen. Dies wird vorzugsweise dadurch unterstützt, dass von dem Server der Aufbau eines Bearer unterstützt und dabei die Zeitdauer des Bestehens des Bearers durch einen Vergebührungsdatensatz protokolliert wird. Zur Vermeidung von inkonsistenten Vergebührungsdatensätzen wird dabei vorzugsweise das Bestehen des Bearers mit einem Timer Mechanismus überwacht, der z.B. als Watchdog ausgebildet sein kann und von dem Server ausgeht.

Schöne Vorteile geben sich, wenn der Server einem PSTN Betreiber zugeordnet wird. Ein PSTN Betreiber kann dann im Idealfall seinen Kunden sogar die anfallenden Gesprächsgebühren ohne jegliche Registrierung direkt über die normale Fernmelderechnung abrechnen. Ein Beispiel hierfür ist ein VoIP Teilnehmer, der per T-DSL und T-Online auf erfindungsgemäßen VoIP Server der Deutschen Telekom zugreift. Der Server der Deutschen Telekom kann dann über die bei T-Online verwaltete IP Adresse des VoIP Teilnehmers eindeutig auf das PSTN Fernmeldekonto des Teilnehmers schließen. Eine separate Prozedur zur Authentifizierung des Teilnehmers kann entfallen.

Die Erfindung wird im folgenden anhand von weiteren Ausführungsbeispielen, die auch in den Figuren dargestellt sind, erläutert. Es zeigt hierbei:
- Figur 1: eine Anordnung zur Durchführung des erfindungsgemäßen Verfahrens mit einem hybriden Kommunikationsnetz, bestehend aus einem paketorientierten Internet, einem leitungsorientierten PSTN, einem zwischengeschalteten Media Gateway und Media Gateway Controller sowie zwei Endpunkten einer Informationsübermittlung
- Figur 2: ein Ablaufdiagramm, in dem eine Ausführung des erfindungsgemäßen Verfahrens exemplarisch aufge zeigt ist

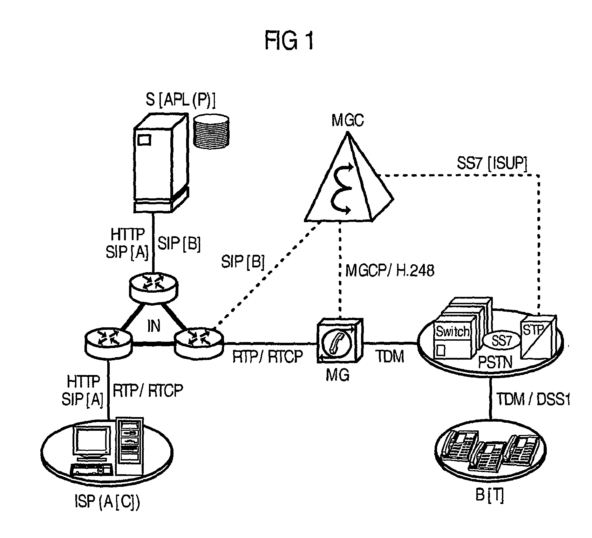

In Figur 1 ist eine beispielhafte Anordnung zur Durchführung des erfindungsgemäßen Verfahrens dargestellt. Es sei betont, dass die hierbei aufgezeigten Ausführungen dabei trotz ihrer teilweise detailgetreuen Darstellung lediglich beispielhafter Natur und nicht einschränkend zu verstehen sind. Sie umfasst ein leitungsorientiertes Kommunikationsnetz PSTN und ein paketorientiertes Kommunikationsnetz IN, die durch ein zwischengeschaltetes Media Gateway zur Konvertierung zwischen unterschiedlichen, netzspezifischen Nutzkanaltechnologien RTP/RTCP (Real Time [Control] Protocol) und TDM (Time Devision Multiplex) und einen zwischengeschalteten Media Gateway Controller zur Konvertierung zwischen unterschiedlichen netzspezifischen Signalisierungsprotokollen SIP (Session Initiation Protocol) und SS7 (Signalling System No. 7) zu einem hybriden Netz zusammengeschlossen sind. Das Gateway MG wird dabei von dem Controller MGC durch ein - vorzugsweise international genormtes - Protokoll, z.B. MGCP (Media Gateway Control Protocol) oder H.248 gesteuert. Das Netz IN ist vorzugsweise als das Internet ausgebildet. Für den einschlägigen Fachmann ist dabei offensichtlich, dass die Erfindung selbstverständlich in weiteren paketorientierten Netzen zum Einsatz kommen kann wie z.B. Intranet, Extranet, einem lokalen Netz (Local Area Network - LAN) oder einem, z.B. als Virtuelles Privates Netz (VPN) ausgebildeten firmeninternen Netz (Corporate Network).

An das Netz IN ist ein Server S angeschlossen, auf den z.B. mit Hilfe eines IP basierten Protokolls HTTP zugegriffen wird. Der Server S umfasst bspw. als Computerprogrammprodukt P ausgebildete Applikationen APL, insbesondere WEB Applikationen, die Softwarecodeabschnitte zur (multi-) prozessorgestützten Ausführung des erfindungsgemäßen Verfahrens umfassen. Optional können dabei Teile der Computerprogrammprodukte P auch mit Hilfe von spezieller Hardware (z.B. Signalling-Prozessoren) realisiert sein. Dem Server zugeordnet ist eine Teilnehmerdatenbank zur Identifikation, Registrierung und/oder Verifikation von Teilnehmern und deren Rechten, auf die z.B. mit einem entsprechenden Protokoll LDAP (Lightweigth Directory Access Protocol) zugegriffen wird.

Ein erster Teilnehmer A ist dem Netz IN, ein zweiter Teilnehmer B dem Netz PSTN zugeordnet. Der Zugriff auf das Netz IN wird mit Hilfe einer bekannten IP Anschlusstechnik (z.B. IP over xDSL, gesteuert durch das Protokoll PPP und vermittelt durch einen zwischengeschalteten ISP zur dynamischen Vergabe von IP Adressen für die - meist zeitlich begrenzte - eindeutige Adressierung des Teilnehmers A im Netz IP), der auf das Netz PSTN mit Hilfe einer bekannten TDM Anschlusstechnik (z.B. ISDN, gesteuert durch das Protokoll DSS1) bewirkt.

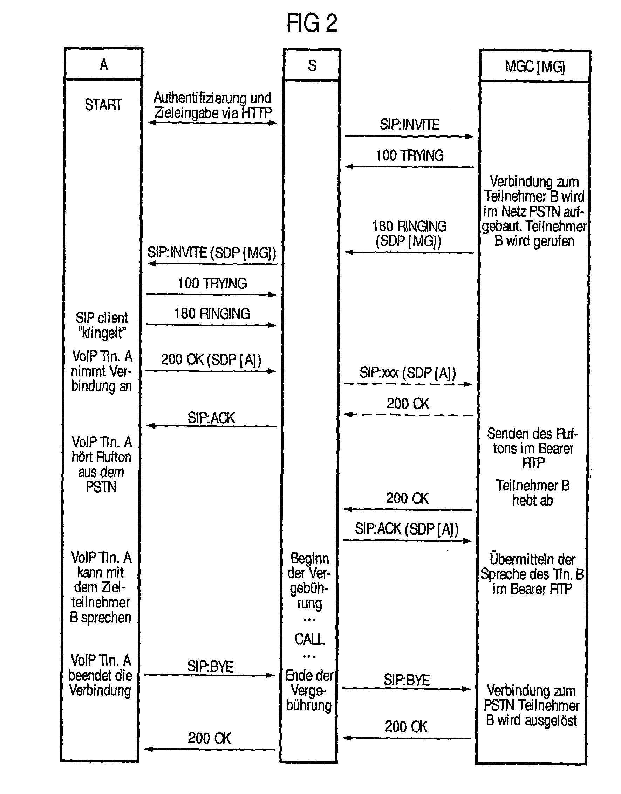

In Figur 2 ist eine Ausführung des erfindungsgemäßen Verfahrens am Beispiel eines exemplarischen, zeitlichen Verlaufs eines Gesprächs CALL zwischen den beiden Teilnehmern A, B mit Hilfe eines Ablaufdiagramms dargestellt. In dem Diagramm sind standardisierte (Signalisierungs-) Nachrichten SIP:INVITE, 100 TRYING, 180 RINGING, 200 OK, SIP:ACK und SIP:BYE zum Austausch von Signalisierungsdaten zwischen dem Teilnehmer A, dem Server S und dem Controller MGC aufgezeigt. Diese Nachrichten sind dem standardisierten Protokoll SIP entnommen, das bei der IETF für die Steuerung von Verbindungen RTP zwischen Endpunkten einer RTP Verbindung entwickelt wurde. Im vorliegenden beispielhaften Ablaufdiagramm sind diese Endpunkte als Teilnehmer A und Gateway MG ausgebildet. Für den Fachmann ist offensichtlich, dass andere Signalisierungsprotokolle, z.B. die der Protokollfamilie H.323, mit gleicher Wirkung eingesetzt werden können.

Als weiteres Ausführungsbeispiel der Erfindung wird ein Zusammenwirken des VoIP Teilnehmers A (bzw. dessen VoIP Clients C), des Servers B, des Controllers MGC, des Gateways MG Endpunkts A und des PSTN Teilnehmers B (bzw. dessen Telephon T) ausgeführt, bei dem es einem PSTN Betreiber ermöglicht wird, Verbindungen von VoIP Teilnehmern zu PSTN Teilnehmern seines Netzes anzubieten und den initiierenden VoIP Anrufer direkt zu vergebühren. Die dem Beispiel zugrunde liegende Netzkonfiguration ist dabei Figur 1 abgebildet, wobei folgende Zuordnungen angenommen werden:

Komponenten des PSTN Betreibers:
- Das leitungsorientierte Netz PSTN
- Der Media Gateway Controller MGC - hier auch IP-PSTN Gateway genannt (z.B. ein hiQ9200 der Firma Siemens)
- Mindestens ein Media Gateway MG (z.B. ein hiG1200 der Firma Siemens)

Komponenten, auf die der VoIP Teilnehmer A seinen Zugang zum Netz IN stützt:
- Eine bestehende Onlineverbindung über (s)einen Internetprovider ISP zum paketorientierten Internet IN
- Einen beliebigen Web-Browser (z.B. einen Internet Explorer der Firma Microsoft)
- Einen beliebigen, installierten VoIP Client C (z.B. einen SIP Sigma Client der Firma Siemens)

Weiterhin kommt im diesem Ausführungsbeispiel ein erfindungsgemäßer WEB und/oder Applikation Server S zum Einsatz, der vorzugsweise dem PSTN Betreiber zugeordnet ist.

Im beschriebenen Szenario kommuniziert der Server S sowohl mit dem IP-PSTN Gateway MGC als auch mit dem VoIP Client C des Teilnehmers A über das standardisierte SIP Protokoll (Session Initiation Protocol). Das beschriebene Verfahren ist aber grundsätzlich auch bei Verwendung anderer Signalisierungsprotokolle möglich, z.B. mittels des H.323 Protokolls.

Die Realisierung des Server S umfasst einen Webserver zur Unterstützung des Protokolls HTTP und einen Applicationserver zur Durchführung des erfindungsgemäßen Verfahrens. Der Server S ist beispielsweise als ein einziger physikalischer Server (genannt Web/Application Server) ausgebildet. Beide Komponenten könnten genau so gut auf unterschiedlichen, miteinander vernetzten Servern liegen.

Um eine Verbindung zum PSTN Teilnehmer B aufzubauen, geht der VoIP Teilnehmer A zum Zeitpunkt START mit seinem Browser durch Angabe einer bestimmten URL auf eine Webseite des Betreibers des Servers, durch die eine graphische Oberfläche der Applikation APL realisiert wird. Vom Server S wird daraufhin optional eine Authentifizierung des Teilnehmers A durchgeführt. Hierfür gibt es mehrere Möglichkeiten:
- Der Teilnehmer A registriert sich einmalig beim Server S und meldet sich dann bei jedem weiteren Zugriff auf den Server S mit Usernamen und Passwort an.
- Die Teilnehmeridentifizierung erfolgt automatisch, z.B. anhand der IP Adresse des Teilnehmers A. Die IP Adresse des Teilnehmers kann der Server S bspw. anhand der von dem Teilnehmer A empfangenen HTTP Nachrichten erkennen, in denen üblicherweise dessen IP Adresse als Kennzeichnung der Quelle der Nachricht enthalten ist. Diese Automatisierung ist beispielsweise dann möglich, wenn der PSTN Betreiber mit dem ISP des VoIP Teilnehmers A identisch ist oder mit diesem kooperiert.

Im Anschluss können von dem Server S optional die technischen Möglichkeiten bzgl. der Erreichbarkeit des VoIP Teilnehmers A ermittelt werden um herauszufinden, ob - und wenn ja - wie der VoIP Client angerufen werden kann. Auch hierfür gibt es mehrere Möglichkeiten:
- Der Teilnehmer A gibt seine SIP Adresse in einem Formular ein und der Web/Application Server S speichert diese Daten in einem Profil dieses Teilnehmers A ab, das in der Teilnehmerdatenbank hinterlegt ist.
- Der Web/Application Server S führt eine automatische Client-Erkennung durch. Er kann dazu beispielsweise eine SIP:OPTIONS Nachricht an den Port 5060 des Teilnehmer-PC's senden und aus einer empfangenen Antwort erkennen, ob und wenn ja, was für ein Client C auf dem PC des VoIP Teilnehmers A installiert ist. Wenn kein Client installiert bzw. instantiiert ist, kann keine Signalisierungsverbindung SIP [A] aufgebaut werden. Die Art des Client kann dazu verwendet werden, den Ablauf nach Figur 2 entsprechend auf die spezifischen Eigenarten des Clients C anzupassen, z.B. durch eine alternative Übermittlung von Daten SDP.

Daraufhin trägt der VoIP-Teilnehmer A in seinem Browser in ein Formular die Rufnummer des gewünschten PSTN Teilnehmers B ein. Alternativ kann der PSTN Betreiber auch einen Telefonbuchdienst anbieten, mit dessen Hilfe ein einfacher Click auf einen bestimmen Eintrag zum Aufbau der Verbindung zwischen den beiden Teilnehmern A, B führt. Der Web/Application Server S bestimmt aus dieser Adressinformation das zuständige IP-PSTN Gateway MGC.

Der folgende Schritt zeigt einen deutlichen Unterschied zu bisherigen VoIP Verbindungen: Während normalerweise der A-Teilnehmer (bzw. sein zugeordneter VoIP Betreiber) eine (Signalisierungs-) Verbindung zu einem B-Teilnehmer aufbaut, initiiert im hier beschriebenen Szenarium der Web/Application Server S zwei separate Signalisierungsverbindungen, eine erste SIP [A] zum VoIP Teilnehmer und eine zweite SIP [B], SS7, DSS1 zum Teilnehmer B und schaltet diese anschließend zu einer durchgängigen Signalisierungsverbindung SIP, SS7, DSS1 zusammen.

Dabei wird infolge des hybriden Netzszenarios das Protokoll der zweiten Signalisierungsverbindung SIP [B], SS7, DSS1 mehrfach in bekannter Weise umgesetzt, und zwar das Protokoll SIP [B], das zwischen dem Server und dem IP-PSTN Gateway MGC zum Einsatz kommt, von dem IP-PSTN Gateway MGC auf das Proto koll SS7 des Netzes PSTN und letzteres dann vom Vermittlungsknoten STP (Signalling Transfer Point) auf das Protokoll DSS1 des Teilnehmeranschlusses. Diese Umsetzungen bleiben für den Server S verborgen, so dass die zweite Signalisierungsverbindung SIP [B], SS7, DSS1 virtuell zwischen dem Server S und dem Teilnehmer B besteht. Das IP-PSTN Gateway MGC wirkt, mit anderen Worten gesagt, gegenüber dem Server S als Proxy des Teilnehmers B.

Neben dem Aufbau einer durchgängigen Signalisierungsverbindung SIP, SS7, DSS1 ist die Durchschaltung einer Nutzkanalverbindung / Bearers RTP, TDM zwischen den Teilnehmern A und B erforderlich. Diese setzt sich in diesem Beispiel aus einen paketorientierten Bearer RTP im Netz IN und einem leitungsorientierten Bearer TDM im Netz PSTN zusammen. Die Endpunkte des Bearers RTP im Netz IN sind dabei das Media Gateway MG sowie der VoIP Client C des Teilnehmers A, die des Bearers TDM im Netz PSTN das Media Gateway MG sowie das konventionelle Telephon T des Teilnehmers B.

Der Web/Application Server S unterstützt dabei den gegenseitigen Austausch von Informationen, die für den Aufbau des paketorientierten Bearers RTP benötigt werden. Dieser Austausch erfolgt z.B. mit Hilfe des Protokolls SDP (Session Description Protocol), welches Bestandteil von SIP ist. Dabei ergeben sich besonders schöne Vorteile, wenn der Standardablauf gemäß dem Offer-Answer Modell von SIP erhalten bleibt. Dieser Standardablauf sieht vor, dass auf der Seite des rufenden Teilnehmers in die Nachricht SIP:INVITE ein Datensatz SDP einfügt wird, der u.a. auch eine Liste aller CODEC enthält, die auf der Seite des rufenden Teilnehmers unterstützt werden (= Offer), und dass auf der Seite des gerufenen Teilnehmers in die Nachricht 200 OK ein Datensatz SDP eingefügt wird, in dem der für das folgende Gespräch CALL zu verwendende CODEC angezeigt wird (= Answer). Diese Unterstützung ist im Ablaufdiagramm von Figur 2 näher erläutert:

Zunächst wird vom Server S eine Nachricht SIP:INVITE zum IP-PSTN Gateway MGC gesendet. Diese Nachricht könnte zwar schon die IP Adresse des Clients C enthalten, weil diese schon mit Zugang der ersten HTTP Nachricht bekannt ist. Es fehlen jedoch zu diesem Zeitpunkt für einen erfolgreichen Aufbau des Bearers RTP zumindest noch die Angabe des Ports des Clients C sowie die Liste der CODEC, die von dem Client C unterstützt werden, so dass die Nachricht SIP:INVITE keinen bzw. zumindest keinen vollständigen SDP Datensatz enthält.

Von dem IP-PSTN Gateway MGC wird daraufhin dem Server S mit einer Nachricht 100 TRYING angezeigt, dass versucht wird, den Teilnehmer B zu erreichen, und der bekannte Aufbau des Bearers TDM im Netz PSTN durchgeführt. In diesem Zusammenhang werden im Media Gateway MG ein in das Netz PSTN führender PSTN Port und ein in das Netz IP führender RTP Port belegt. Die Signalisierung zwischen dem IP-PSTN Gateway MGC und dem Teilnehmer B gemäß dem Protokoll SS7 - dort insb. dem Protokoll ISUP - und dem Protokoll DSS1 ist Stand der Technik und wird hier nicht näher beschrieben. Das gleiche gilt für die Signalisierung zwischen dem IP-PSTN Gateway MGC und dem Media Gateway MG mit den Protokollen MGCP bzw. H.248.

Nach erfolgreichem Aufbau des Bearers TDM wird im Netz PSTN der Klingelton angelegt und im Bearer TDM bis zum Media Gateway MG übermittelt. Vom IP-PSTN Gateway MGC wird die Nachricht 180 RINGING an den Server gesendet, in der ein vollständiger Datensatz SDP [MG] enthalten ist, insbesondere der RTP Port im Gateway MG sowie die Liste der von dem RTP Port des Media Gateway MG unterstützten CODEC.

Der Datensatz SDP [MG] wird von Server S dazu verwendet, um eine Nachricht SIP:INVITE zu erzeugen, die einen vollständigen Datensatz SDP im Sinne einer Offer enthält. Diese Nachricht SIP:INVITE (SDP [MG]) wird an den Teilnehmer A gesendet. Mit anderen Worten: Die Nachricht SIP:INVITE in Richtung des Teilnehmers A wird in diesem Ausführungsbeispiel solange verzögert, bis der Datensatz SDP [MG des] Media Gateways MG vom Server S empfangen wird. Dieser Ablauf könnte nach dem Offer/Answer-Modell von SIP selbstverständlich auch variiert werden. Der hier beschriebene Ablauf resultiert aber in Richtung des Clients C in dem oben beschriebenen Standardablauf. Damit ist der besonders schöne Vorteil verbunden, dass dieser Ablauf von allen SIP Clients C unterstützt werden sollte.

Nach Empfang der Nachricht SIP:INVITE beginnt der VoIP Client C des Teilnehmers mit der Anzeige des eingehenden Anrufs. Dies wird dem Server mit den üblichen Nachrichten 100 TRYING und 180 RINGING angezeigt. Sobald der Teilnehmer A den Ruf annimmt, wird an den Server S eine Nachricht 200 OK gesendet. Spätestens in diese Nachricht wird ein Datensatz SDP [A] eingefügt, mit dem u.a. der Port des VoIP Clients C und der ausgewählte CODEC angezeigt wird. Der Bearer RTP kann bereits unidirektional vom Client C in Richtung des Media Gateways MG in Betrieb genommen werden.

Für eine Aktivierung der Gegenrichtung vom Media Gateway MG zu Client C ist noch erforderlich, den Datensatz SDP [A] an den Media Gateway MG weiterzuleiten. Sobald diese Daten vom Server S an den Media Gateway MGC weitergeleitet sind, kann der Bearer RTP bi-direktional in Betrieb genommen werden. Die Teilnehmer A und B können dann miteinander sprechen.

Eine Möglichkeit zur Weiterleitung der Daten SDP [A] besteht darin, sie dem IP-PSTN Gateway mit der Nachricht SIP:ACK mitzuteilen, die als Bestätigung der Nachricht 200 OK übermittelt wird, mit der angezeigt wird, dass der Teilnehmer B den eingegangen Ruf angenommen hat.

Eine weitere Möglichkeit besteht darin, die Daten SDP [A] unmittelbar nach deren Empfang mit einer gesonderten Nachricht SIP:xxx weiterzuleiten. Dies hat den Vorteil, dass mit Empfang der Daten SDP [A] der RTP Port des Media Gateway MG aktiviert und der bereits aus dem Netz PSTN anliegende Rufton bis zum Abheben des Zielteilnehmers B als auch Töne oder Ansagen (Besetzt, Fehlerfälle, usw.) an den Client C übermittelt werden können.

Die Nachricht SIP:xxx kann als Nachricht SIP:UPDATE ausgebildet sein. Dies stellt zwar einen bewussten Verstoß gegen das Offer-Answer Modell dar, weil die Nachricht SIP:UPDATE grundsätzlich eine neue Offer darstellt. Diese kann jedoch durch eine entsprechende Anpassung des IP-PSTN Gateway MGC kompensiert werden.

Alternativ kann die Nachricht SIP:xxx als Nachricht SIP:PRACK ausgebildet sein. Zur Unterstützung dieser Alternative wird dabei in der vorausgegangen Nachricht SIP:INVITE dem IP-PSTN Gateway MGC angezeigt, das "reliable provisional responses" unterstützt wird. In diesem Fall übermittelt das IP-PSTN Gateway MGC die Daten SDP [MG] schon in der Nachricht 180 RINGING und erwartet daraufhin die Nachricht SIP:PRACK als Bestätigung. In diese Bestätigung werden dann die von Teilnehmer A empfangenen Daten SDP [A] eingefügt. Dabei wird das Senden der Nachricht SIP:PRACK vom Server S so lange verzögert, bis die Nachricht 200 OK vom Teilnehmer A empfangen wurde.

Als Variante können die Daten SDP [A] unabhängig von der Übermittlung mit einer gesonderten Nachricht SIP:xxx in jedem Fall mit der Nachricht SIP:ACK (SDP [A]) übermittelt werden. Somit werden von dem Server S auch Media Gateways MG unterstützt, deren zugehöriges IP-PSTN Gateway MGC den Empfang einer gesonderten Nachricht SIP:xxx nicht unterstützt.

Für den Fall, dass der Teilnehmer B abhebt, bevor der Teilnehmer A den an ihn ergangenen Ruf annimmt, kann bspw. über ein Bearer Redirection Verfahren eine Ansage für den Teilnehmer B angelegt werden, dass es sich um einen VoIP Call handelt und der Teilnehmer B einen Augenblick bis zum Zustandekommen der Verbindung warten möge.

Sobald der Web/Application Server S beide Nachrichten 200 OK auf die ausgesendeten Nachrichten SIP:INVITE empfangen hat, beginnt er mit der Vergebührung des Gesprächs CALL. Die Vergebührung endet, sobald der Web/Application Server eine Nachricht SIP:BYE von einem der beteiligten Endpunkte empfängt. Dabei wird z.B. ein abschließender Datensatz für die Vergebührung geschrieben.

Gemäß einer weiteren Ausführung der Erfindung wird in zyklischen Abständen das Bestehen des Bearers RTP überprüft. Vorteilhaft kann so bei einem Absturz der Client Software C die Vergebührung beendet werden. Das Protokoll SIP enthält zu diesem Zweck einen Session Timer Mechanismus, welcher hier beispielsweise zur Anwendung kommen könnte.

## Patentansprüche

1. Verfahren zur Verbindung von Teilnehmern mit zumindest einem Kommunikationsnetz mit einem ersten Teilnehmer (A) und mit einem zweiten Teilnehmer (B), umfassend folgende Schritte:
- Aufbau einer ersten Signalisierungsverbindung (SIP [A]) zwischen dem Server und dem ersten Teilnehmer und einer zweiten Signalisierungsverbindung (SIP [B], SS7, DSS1) zwischen dem Server und dem zweiten Teilnehmer unter Berücksichtigung der Daten,
- Zusammenführen der beiden Signalisierungsverbindungen zu einer durchgängigen Signalisierungsverbindung (SIP, SS7, DSS1) zwischen den beiden Teilnehmern.
**dadurch gekennzeichnet, daß**
- kennzeichnende Daten des ersten Teilnehmers (A) und des zweiten Teilnehmers (B) durch einen Server (S) erfasst werden,
- wobei der Server als WEB Applikation (APL) ausgebildet ist, auf die über ein Internet (IN) und/oder ein IP basiertes Protokoll (HTTP) zugegriffen wird,
- wobei als kennzeichnendes Datum die IP Adresse erfasst wird mit der auf die WEB Applikation zugegriffen wird.

2. Verfahren nach dem vorstehenden Anspruch, bei dem im Fall eines Zugriffs mit Hilfe einer mit der IP Adresse - insbesondere mit Port 5060 - adressierten Anfrage festgestellt wird, mit welcher Software der auf den Server zugreifende Teilnehmer Informationen in das Kommunikationsnetz übermittelt.

3. Verfahren nach einem der vorstehenden Ansprüche, bei dem die Identität von auf den Server zugreifenden Teilnehmern unter Berücksichtigung der erfassten Daten bestimmt wird.

4. Verfahren nach dem vorstehenden Anspruch, bei dem zur Bestimmung der Identität des Teilnehmers eine erstmalige Registrierung vorgenommen wird, bei der die Identität eindeutig kennzeichnende Daten erfasst werden.

5. Verfahren nach einem der vorstehenden Ansprüche, bei dem von dem Server der Austausch von Informationen unterstützt wird, die für die Einrichtung eines Bearers (RTP, TDM) zwischen den Teilnehmern erforderlich sind.

6. Verfahren nach dem vorstehenden Anspruch, bei dem das Bestehen des Bearers von dem Server - vorzugsweise durch Einsatz eines Timer Mechanismus - überprüft wird.

7. Verfahren nach einem der beiden vorstehenden Ansprüche, bei dem von dem Server zumindest ein Vergebührungsdatensatz protokolliert wird, aus dem zumindest die Zeitdauer des Bestehens des Bearers abgeleitet werden kann.

8. Verfahren nach einem der vorstehenden Ansprüche, bei dem der Server einem PSTN Betreiber zugeordnet ist.

9. Verfahren nach den beiden vorstehenden Ansprüchen, bei dem die Vergebührung für diejenigen Teilnehmer, die dem PSTN des Betreibers zugeordnet sind, über die Fernmelderechnung des PSTN Betreibers erfolgt.

10. Computerprogrammprodukt (P) umfassend Softwarecodeabschnitte, mit denen ein Verfahren nach einem der vorstehenden Verfahrensansprüche durch zumindest einen Prozessor ausgeführt wird.

11. Computerprogrammprodukt nach Anspruch 10, ausgebildet als VoIP Client oder WEB Applikation (APL).

12. Vorrichtung umfassend Mittel zur Durchführung des Verfahrens nach einem der vorstehenden Verfahrensansprüche.

13. Vorrichtung nach Anspruch 12, ausgebildet als WEB oder Applikation Server (S).

14. Anordnung umfassend die zur Durchführung eines Verfahrens nach einem der vorstehenden Verfahrensansprüche erforderlichen Computerprogrammprodukte und/oder Vorrichtungen.

15. Anordnung nach Anspruch 14, ausgebildet als hybrides Kommunikationsnetz (IN, PSTN, MC, MCC).

## Claims

1. Method for connecting subscribers to at least one communication network having a first subscriber (A) and having a second subscriber (B), comprising the following steps:
- a first signalling connection (SIP [A]) is set up between the server and the first subscriber and a second signalling connection (SIP [B], SS7, DSS1) is set up between the server and the second subscriber taking account of the data,
- the two signalling connections are merged to form a continuous signalling connection (SIP, SS7, DSS1) between the two subscribers,
**characterized in that**
- identifying data for the first subscriber (A) and for the second subscriber (B) are captured by a server (S),
- the server being in the form of a WEB application (APL) which is accessed using an internet (IN) and/or an IP-based protocol (HTTP),
- an identifying data item captured being the IP address which is used to access the web application.

2. Method according to the preceding claim, in which access using a request sent with the IP address - particularly with port 5060 - involves establishing what software the subscriber accessing the server uses to transmit information to the communication network.

3. Method according to one of the preceding claims, in which the identity of subscribers accessing the server is determined taking account of the captured data.

4. Method according to the preceding claim, in which the identity of the subscriber is determined by performing first-time registration in which data explicitly identifying the identity are captured.

5. Method according to one of the preceding claims, in which the server supports the interchange of information which is required for setting up a bearer (RTP, TDM) between the subscribers.

6. Method according to the preceding claim, in which the existence of the bearer is checked by the server - preferably using a timer mechanism.

7. Method according to one of the two preceding claims, in which the server logs at least one charging data record from which it is possible to derive at least the period for which the bearer exists.

8. Method according to one of the preceding claims, in which the server is associated with a PSTN operator.

9. Method according to the two preceding claims, in which the charging for those subscribers who are associated with the operator's PSTN is performed using the PSTN operator's telecommunications billing.

10. Computer program product (P) comprising
software code sections which are used by at least one processor to execute a method according to one of the preceding method claims.

11. Computer program product according to Claim 10, in the form of a VoIP client or WEB application (APL).

12. Apparatus comprising means for carrying out the method according to one of the preceding method claims.

13. Apparatus according to Claim 12, in the form of a WEB or application server (S).

14. Arrangement comprising the computer program products and/or apparatuses required for carrying out a method according to one of the preceding method claims.

15. Arrangement according to Claim 14, in the form of a hybrid communication network (IN, PSTN, MC, MCC).

## Revendications

1. Procédé pour relier des usagers au moyen d'au moins un réseau de communication, avec un premier usager (A) et un deuxième usager (B), comprenant les étapes suivantes:
- établissement d'une première liaison de signalisation (SIP [A]) entre le serveur et le premier usager et d'une deuxième liaison de signalisation (SIP [B], SS7, DSS1) entre le serveur et le deuxième usager compte tenu des données,
- fusionnement des deux liaisons de signalisation en une liaison de signalisation interconnectée (SIP, SS7, DSS1) entre les deux usagers,
**caractérisé en ce que**
- des données caractéristiques du premier usager (A) et du deuxième usager (B) sont saisies par un serveur (S),
- le serveur se présentant sous la forme d'une application web (APL) qui est accédée via un internet (IN) et/ou un protocole (HTTP) basé sur IP,
- l'adresse IP avec laquelle l'application web est accédée étant saisie en tant que donnée caractéristique.

2. Procédé selon la revendication précédente, dans lequel, dans le cas d'un accès à l'aide d'une requête adressée avec l'adresse IP, en particulier avec le port 5060, il est constaté avec quel logiciel l'usager qui accède au serveur transmet des informations vers le réseau de communication.

3. Procédé selon l'une des revendications précédentes, dans lequel l'identité d'usagers qui accèdent au serveur est déterminée compte tenu des données saisies.

4. Procédé selon la revendication précédente, dans lequel est effectué, pour déterminer l'identité de l'usager, un premier enregistrement dans lequel l'identité est saisie des données univoquement caractéristiques.

5. Procédé selon l'une des revendications précédentes, dans lequel le serveur supporte l'échange d'informations qui sont nécessaires pour établir un canal porteur (RTP, TDM) entre les usagers.

6. Procédé selon la revendication précédente, dans lequel l'existence du canal porteur est vérifiée par le serveur, de préférence par la mise en oeuvre d'un mécanisme de minuterie.

7. Procédé selon l'une des deux revendications précédentes, dans lequel le serveur consigne au moins un jeu de données de facturation dont il est possible de déduire au moins la durée temporelle de l'existence du canal porteur.

8. Procédé selon l'une des revendications précédentes, dans lequel le serveur est affecté à un exploitant PSTN.

9. Procédé selon l'une des deux revendications précédentes, dans lequel la facturation, pour les usagers affectés au PSTN de l'exploitant, se fait par le biais de la facture de téléphone de l'exploitant PSTN.

10. Produit de programme informatique (P) comprenant des sections de code de logiciel à l'aide desquelles un procédé selon l'une des revendications précédentes relatives au procédé est exécuté par au moins un processeur.

11. Produit de programme informatique selon la revendication 10, se présentant sous la forme d'un client VoIP ou d'une application web (APL).

12. Dispositif comprenant des moyens pour exécuter le procédé selon l'une des revendications précédentes relatives au procédé.

13. Dispositif selon la revendication 12, se présentant sous la forme d'un serveur web ou d'applications (S).

14. Dispositif comprenant les produits de programmes informatiques et/ou dispositifs requis pour exécuter un procédé selon l'une des revendications précédentes relatives au procédé.

15. Ensemble selon la revendication 14, se présentant sous la forme d'un réseau de communication hybride (IN, PSTN, MC, MCC).
